# FASCICULE DE BREVET EUROPEEN

(11) **EP 0 803 700 B1**
(45) Date de publication et mention de la délivrance du brevet: **14.11.2001**
(21) Numéro de dépôt: 97400828.6
(22) Date de dépôt: 11.04.1997
(51) Int. Cl.: F42B 3/103

(54) **Initiateur à prise bifilaire auto-bloquante pour générateurs pyrotechniques de gaz**
Zünder mit selbstklemmendem Zweileiter-Anschluss für pyrotechnische Gasgeneratoren
Initiator with two-wire self-locking connector for pyrotechnic gas generators

(30) Priorité: 22.04.1996 FR 9604995
(43) Date de publication de la demande: 29.10.1997
(73) Titulaire: S.N.C. LIVBAG, 91710 Vert Le Petit (FR)
(72) Inventeur: Duvacquier, Daniel, 33300 Bordeaux (FR); Perotto, Christian, 91610 Ballancourt (FR)
(74) Mandataire: Pech, Bernard

(56) Documents cités:
- EP-A- 0 102 156
- EP-A- 0 474 113
- EP-A- 0 512 682
- EP-A- 0 547 443
- US-A- 5 345 872
- US-A- 5 433 147

## Description

La présente invention se rapporte au domaine de la sécurité automobile. Plus précisément l'invention concerne un initiateur pyrotechnique à prise bifilaire autobloquante permettant un assemblage aisé de générateurs pyrotechniques de gaz bifilaires.

Le gonflement de coussins de protection ou la mise sous tension de ceintures de sécurité en cas d'accidents de véhicules automobiles nécessite, compte tenu des temps de réponse très courts exigés des dispositifs de sécurité, l'emploi de générateurs pyrotechniques de gaz.

Ces générateurs pyrotechniques de gaz comprennent essentiellement une composition pyrotechnique génératrice de gaz mise à feu, en cas d'accident, par un initiateur qui transforme le signal électrique fourni par un détecteur de collision en phénomène de combustion.

L'initiateur comporte donc deux électrodes, en général cylindriques, situées en périphérie du générateur et qui viennent se brancher dans une prise reliée par des fils conducteurs au détecteur de collision fournissant l'impulsion électrique.

Les générateurs équipés de tels initiateurs qui sont, par exemple, décrits dans la demande de brevet français 95.02100, ont l'inconvénient de pouvoir présenter avec le temps de mauvais contacts électriques, notamment par suite des vibrations auxquelles ils sont soumis.

Pour des raisons de sécurité, les constructeurs demandent de plus en plus que le générateur soit équipé d'un initiateur à fils encore appelé initiateur bifilaire, de manière à ce que le générateur soit directement branché sur le module de détecti on de collision en garantissant ainsi le maintien de bons contacts électriques dans le temps.

Pour ce faire il faut que les électrodes de l'initiateur soient fixées, par soudure ou par accrochage, aux fils conducteurs de l'électricité, comme cela est décrit par exemple, dans les brevets US-A-5,345,872 et US-A-5 433 147. Mais cette réponse, en apparence simple, pose de nouveaux problèmes à l'homme de métier pour la fabrication en séries industrielles de générateurs équipés de tels initiateurs.

Industriellement, les générateurs pyrotechniques de gaz sont assemblés en continu sur des chaînes de montage, en général à partir de l'initiateur.

Si la fixation des fils sur les électrodes de l'initiateur est faite en début de chaîne de montage, il faut transporter sur toute la chaîne des générateurs prolongés par des fils qui peuvent avoir plus d'un mètre de long, ce qui n'est pas pratique.

Si la fixation des fils sur les électrodes de l'initiateur est faite en fin de chaîne de montage,ou ultérieurement chez l'équipementier, voire chez le constructeur automobile, cette fixation sera, avec les moyens connus actuellement, externe à l'initiateur et donc au générateur et ne donnera pas toutes les garanties de sécurité souhaitées. Par ailleurs l'homme de métier n'aime pas effectuer des soudures sur un générateur pyrotechnique contenant des matières actives.

Enfin, qu'elles soient effectuées en début ou en fin de chaîne de montage, les opérations de fixation des fils, ralentissent souvent la cadence de fabrication des générateurs.

L'homme de métier est donc confronté au problème d'arriver à fixer de manière simple et irréversible des fils conducteurs sur les électrodes d'un initiateur pyrotechniques contenu dans un générateurs de gaz et ce de manière à ce que la fixation soit interne à l'inflammateur ou au générateur de gaz.

Le but de la présente invention est précisément de fournir une solution à ce problème.

L'invention concerne donc un initiateur pyrotechnique bifilaire qui est principalement constitué par :
**i)-** une embase dont les extrémités sont constituées par deux faces, la dite embase comportant un premier alésage central, dit alésage "inférieur", débouchant sur l'une des dites faces et dans lequel pénètrent deux fils conducteurs de l'électricité constitués chacun par une âme conductrice entourée par une gaine isolante, ainsi qu'un second alésage central, dit alésage "supérieur", qui est séparé du premier alésage et qui débouche sur l'autre face et qui contient un dispositif d'initiation pyrotechnique,
**ii)** deux électrodes fixées à l'intérieur de la dite embase et dont les extrémités sont situées dans chacun des deux alésages, les extrémités inférieures de chaque électrode étant reliées à l'un des dits fils conducteurs tandis que les extrémités supérieures des dites électrodes sont connectées au dispositif d'initiation pyrotechnique,
   et qui est caractérisé en ce que :
**iii)** chacune des dites électrodes est terminée dans sa partie inférieure par une pince conductrice susceptible, sous la contrainte d'une poussée exercée dans le prolongement des dites électrodes, de serrer l'un des dits fils conducteurs en découpant sa gaine isolante,
**iv)** la partie inférieure du dit premier alésage central présente au moins un évidement,
**v)** les extrémités des dits fils conducteurs pénétrant dans le premier alésage central de la dite embase sont supportées par une bague de fermeture dont la paroi latérale présente au moins une nervure externe permettant, en coopération avec le dit évidement, un encliquetage irréversible de la bague dans l'embase, la dite bague comportant par ailleurs des éléments de mise sous contrainte des dites pinces conductrices.

Avantageusement le dit premier alésage central présente deux gorges distinctes constituant les dits évidements.

Avantageusement encore la dite embase est une embase de révolution dont les extrémités sont constituées par deux faces planes, le premier et le second alésage étant des alésages de révolution.

Selon un premier mode préféré de réalisation de l'invention chaque pince conductrice est essentiellement constituée par deux pattes métalliques planes disposées en regard l'une de l'autre, chaque patte comportant une zone déformable constituée par deux attaches métalliques en forme de secteurs circulaires se faisant face. Les deux pattes sont reliées entre elles de manière à ce que, lorsque les dites pattes sont en butée, une poussée exercée sur ces dernières provoque une contraction de leurs zones déformables avec flexion des attaches métalliques vers le centre de l'espace compris entre les deux pattes. Dans cette configuration les attaches métalliques jouent le rôle de tenailles coupantes. De telles pinces sont, par exemple, décrites dans les brevets EP-A- 0 102 156 et EP-B- 0 474 113.

Selon un second mode préféré de réalisation de l'invention ladite bague de fermeture est traversée par deux alésages cylindriques dans lesquels pénètrent chacun des fils conducteurs gainés.

Avantageusement chacun de ces deux alésages comprend une partie inférieure dont le diamètre est sensiblement égal au diamètre extérieur des fils conducteurs gainés et une partie supérieure dont le diamètre permet l'introduction d'une pince conductrice. Dans cette configuration la bague de fermeture présente dans chacun des alésages un fond situé à la jonction de la dite partie inférieure et de la dite partie supérieure.

Préférentiellement la partie inférieure de chaque alésage porté par la bague est prolongée à l'intérieur de la bague par une collerette creuse dont le diamètre intérieur est sensiblement égal au diamètre extérieur des dits fils gainés, les fonds et les dites collerettes constituant ainsi les éléments de mise sous contrainte des dites pinces conductrices.

Selon un troisième mode préféré de réalisation de l'invention, la dite embase est moulée sur les dites électrodes, la dite embase pouvant être en matière plastique ou en céramique enrobée d'une couche de matière plastique.

Selon un quatrième mode préféré de réalisation de l'invention, le dispositif d'initiation pyrotechnique est constitué par une résistance fixée aux dites électrodes et par une composition pyrotechnique d'initiation qui est avantageusement constituée par une poudre d'allumage, par exemple une poudre à base de trinitrorésorcinate de plomb éventuellement mélangée à une laque à base de nitrocellulose. La dite résistance pourra avantageusement être constituée par un fil résistant ou par un circuit imprimé résistant.

Selon les cas l'initiateur sera utilisé en l'état ou renforcé par une poudre vive contenue dans un capuchon métallique fragmentable prenant appui sur la partie supérieure de l'embase. Comme poudre vive on utilisera avantageusement des poudres du type titane/perchlorate de potassium, zirconium/perchlorate de potassium ou encore bore/nitrate de potassium.

Selon un cinquième mode préféré de réalisation de l'invention, les dites électrodes sont entourées par au moins un noyau de ferrite.

L'invention concerne également l'utilisation d'un initiateur pyrotechnique tel que décrit ci-dessus dans un générateur pyrotechnique de gaz destiné à la sécurité automobile.

Ce générateur peut être un générateur destiné à gonfler un coussin de protection pour occupant d'un véhicule automobile ou encore un générateur destiné à actionner un rétracteur de ceinture de sécurité pour occupant d'un véhicule automobile.

Enfin l'invention concerne également un procédé d'assemblage sur une chaîne continue d'un générateur pyrotechnique de gaz utilisant un tel initiateur, le procédé étant caractérisé en ce que l'initiateur, dépourvu des fils conducteurs et de la bague de fermeture, est incorporé au générateur en début de chaîne d'assemblage et en ce que les dits fils conducteurs supportés par la bague de fermeture ne sont incorporés à l'initiateur qu'ultérieurement, soit en fin de chaîne d'assemblage, soit chez l'équipementier ou chez le constructeur automobile. Il faut noter que l'invention permet d'utiliser des fils gainés non dénudés ce qui constitue un avantage supplémentaire de cette dernière.

L'invention permet ainsi de fixer de manière sûre, irréversible et sans soudure les fils conducteurs à l'initiateur contenu dans le générateur, la jonction des fils avec les électrodes étant interne à l'initiateur ou au générateur.

On décrit maintenant une réalisation préférée de l'invention en faisant référence aux figures 1 à 13.

La figure **1** est une vue de la face inférieure d'un initiateur selon l'invention dans lequel les pinces conductrices constituent des pièces distinctes des électrodes.

La figure **2** est une coupe selon BB de l'initiateur représenté à la figure 1.

La figure **3** est une coupe selon AA de l'initiateur représenté à la figure 1.

La figure **4** est une vue en perspective d'une pince conductrice utilisée pour la réalisation de l'initiateur représenté aux figures 1 à 3.

Les figures **5** et **6** illustrent, vu en coupe respectivement selon BB. et AA, le procédé d'assemblage des fils conducteurs, de la bague de fermeture et des pinces conductrices dans l'initiateur représenté aux figures 1 à 3.

La figure **7** est une vue de la face inférieure d'un initiateur selon l'invention dans lequel les pinces conductrices et les électrodes forment des pièces uniques.

La figure **8** est une coupe selon DD de l'initiateur représenté à la figure 7.

La figure **9** est une coupe selon CC de l'initiateur représenté à la figure 7.

Les figures **10** et **11** illustrent, vu en coupe respectivement selon DD et CC, le procédé d'assemblage des fils conducteurs et de la bague de fermeture dans l'initiateur représenté aux figures 7 et 9.

La figure **12** représente, vu en coupe, un générateur pyrotechnique de gaz pour coussin gonflable destiné au conducteur d'un véhicule automobile et équipé d'un initiateur tel que représenté aux figures 7 à 9.

La figure **13** représente, vu en coupe, un générateur pyrotechnique de gaz pour rétracteur de ceinture de sécurité équipé d'un initiateur tel que représenté aux figures 7 et 9.

Selon les figures les conducteurs électriques constitués par les fils conducteurs et leurs gaines sont représentés coupés ou non coupés pour des raisons de clarté des figures.

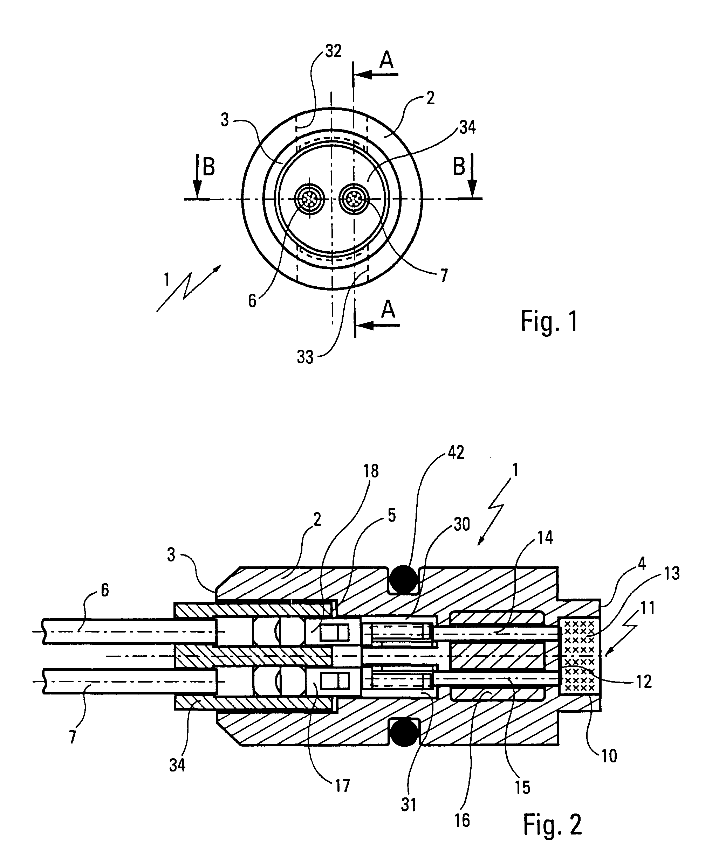

En se reportant plus particulièrement aux figures 1 à 3, on observe qu'un initiateur bifilaire 1 selon l'invention comprend une embase 2 de révolution, de forme générale cylindrique, dont les extrémités sont constituées par deux faces planes 3 et 4. L'embase 2 est constituée par un matériau isolant vis à vis du courant électrique, par exemple une matière plastique ou une céramique enrobée de matière plastique et porte un joint extérieur d'étanchéité 42 pour permettre son introduction dans un générateur de gaz.

L'embase 2 comporte un premier alésage central 5 de révolution débouchant sur la face plane 3. Dans la suite de la description l'alésage 5 sera qualifié d'"inférieur", la face 3 sera qualifiée d' "inférieure". Dans l'alésage 5 pénètrent deux fils conducteurs de l'électricité 6 et 7 constitués chacun par une âme 8 conductrice de l'électricité entourée par une gaine isolante 9.

L'embase 2 comporte un second alésage 10 central de révolution débouchant sur la face 4 opposée à la face 3. Dans la suite de la description l'alésage 10 sera qualifié de "supérieur" et la face 4 sera qualifiée de "supérieure".

L'alésage supérieur 10 contient un dispositif d'initiation pyrotechnique 11 constitué par un fil résistant 12 recouvert par une composition pyrotechnique d'initiation 13.

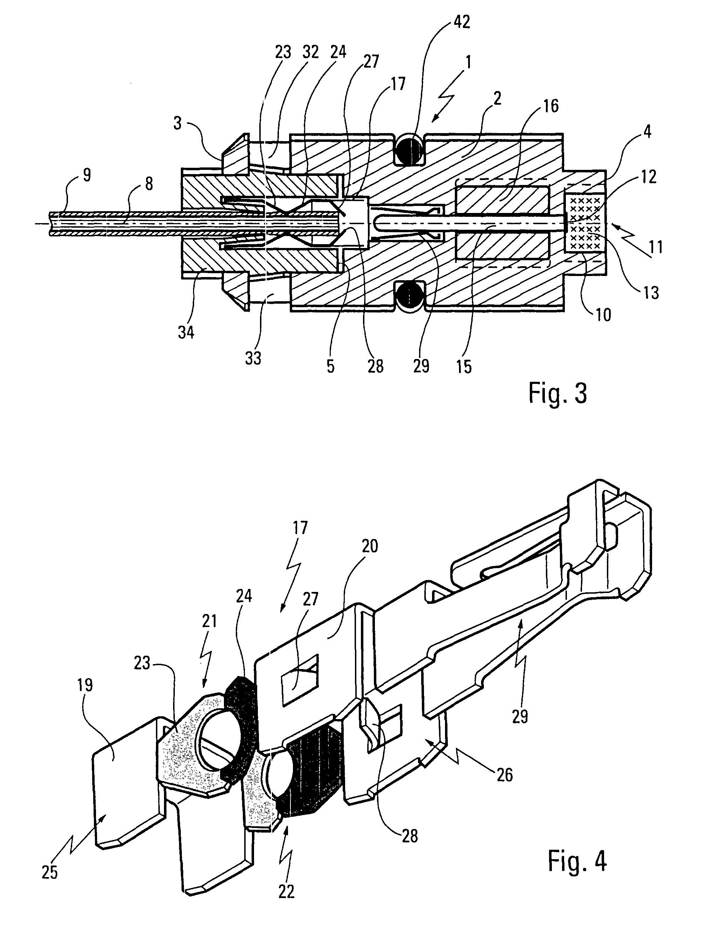

Deux électrodes 14 et 15 sont fixées à l'intérieur de l'embase 2. Comme cela peut être vu sur les figures 2 et 3, l'embase 2 est moulée sur les dites électrodes. Avantageusement les électrodes 14 et 15 sont entourées par un noyau de ferrite 16.

Les extrémités supérieures des dites électrodes sont soudées au fil résistant 12 du dispositif d'initiation pyrotechnique 11.

Les extrémités inférieures des dites électrodes sont reliées chacune à l'un des fils conducteurs 6 ou 7 ; selon une première caractéristique de l'invention chacune des électrodes 14 et 15 est terminée dans sa partie inférieure par une pince conductrice 17 et 18 susceptible, sous la contrainte d'une poussée exercée dans le prolongement des dites électrodes, de serrer l'un des dits fils conducteurs 6 ou 7 en découpant sa gaine isolante 9.

Dans la réalisation représentée aux figures 1 à 3 les pinces conductrices 17 et 18 constituent des pièces distinctes des électrodes 14 et 15 et en cours d'assemblage elles sont connectées à ces dernières comme il sera expliqué un peu plus loin dans la description.

On a représenté à la figure 4, en perspective, une telle pince conductrice.

La pince 17 est constituée essentiellement par deux cavaliers métalliques rigides 19 et 20 en forme de U disposés dans le prolongement l'un de l'autre. Les parois latérales des deux cavaliers 19 et 20 sont reliées entre elles par deux jonctions déformables 21 et 22 constituées chacune par deux attaches métalliques 23 et 24 en forme de secteurs circulaires se faisant face. Ainsi la pince 17 se présente comme essentiellement constituée par deux pattes métalliques planes 25 et 26 disposées en regard l'une de l'autre, chaque patte comportant une zone déformable qui coïncide avec les jonctions déformables 21 et 22.

L'écartement entre les pattes 25 et 26 permet l'introduction d'un fil conducteur 6 ou 7. Deux butées internes 27 et 28 pratiquées sur les parois latérales du cavalier 20 définissent la limite d'introduction d'un tel fil conducteur.

La pince 17 est prolongée par une prise 29 susceptible d'enserrer l'une des électrodes 14 ou 15.

Une telle pince est décrite en détails dans la demande de brevet EP-A-0 102 156.

On peut également observer sur la figure 2 que l'alésage inférieur 5 est prolongé par deux alésages étroits 30 et 31 entourant respectivement les extrémités inférieures des électrodes 14 et 15. Ces alésages 30 et 31 permettent l'introduction des prises 29 des pinces conductrices 17 et 18 tout en servant de butée à l'introduction des pattes 25 et 26.

Selon une seconde caractéristique de l'invention la partie intérieure du premier alésage 5 présente deux évidements sous forme de gorges radiales 32 et 33 diamètralement opposées.

Selon une troisième caractéristique de l'invention les extrémités des fils conducteurs 6 et 7 pénétrant dans l'alésage inférieur 5 de l'embase 2 sont supportés par une bague de fermeture 34. Il est essentiel, pour des raisons qui seront explicitées plus loin dans la description, que cette bague de fermeture soit réalisée dans une matière plastique non conductrice de l'électricité et présentant une certaine élasticité.

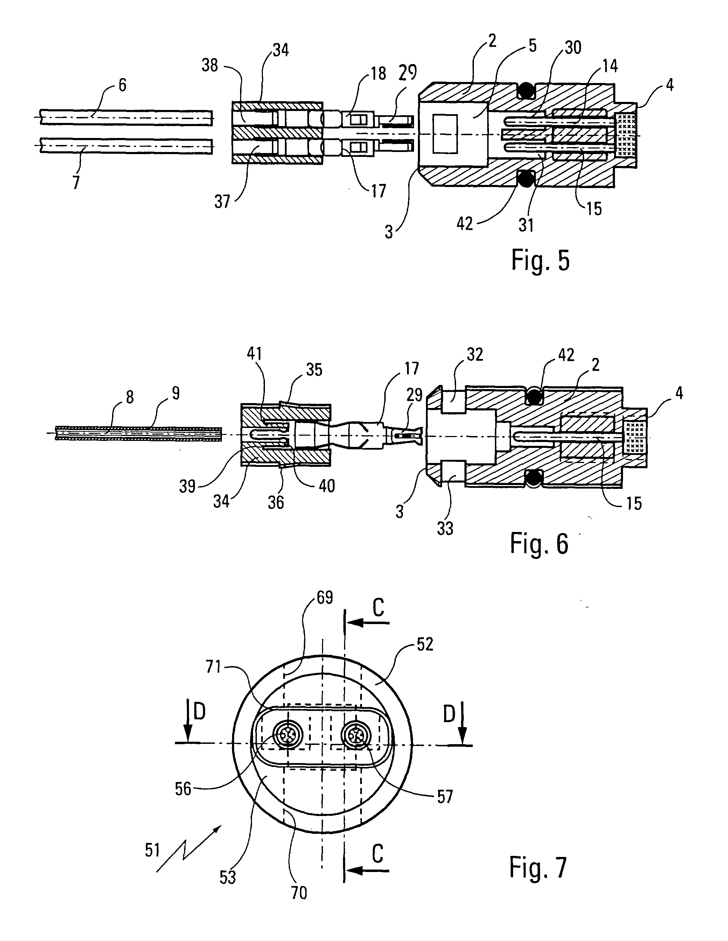

En se reportant plus particulièrement aux figures 5 et 6 on observe que cette bague de fermeture 34 présente sur sa paroi latérale externe deux nervures 35 et 36 permettant en coopération avec les gorges 32 et 33 un encliquetage irréversible de la bague 34 dans l'embase 2.

La bague 34 de forme générale cylindrique est traversée par deux alésages 37 et 38 dans lesquels pénètrent chacun des fils conducteurs gainés 6 ou 7.

Chacun des deux alésages 37 ou 38 de la bague 34 comprend une partie inférieure dont les dimensions minimales sont sensiblement égales au diamètre extérieur des fils conducteurs gainés 6 ou 7 et une partie supérieure dont les dimensions permettent l'introduction de l'une des pinces conductrices 17 ou 18, la bague de fermeture présentant ainsi dans chacun des alésages un fond 39 servant de butée arrière pour les pinces 17 ou 18.

La partie inférieure de chaque alésage est prolongée à l'intérieur de la bague 34 par deux languettes 40 et 41 dont l'espacement est sensiblement égal au diamètre extérieur des fils gainés 6 ou 7, les fonds 39 et les languettes 40 et 41 constituant ainsi des éléments de mise sous contrainte des pinces conductrices 17 et 18 comme il va être maintenant expliqué.

L'introduction des fils conducteurs 6 et 7 dans l'initiateur 1 se fait comme représenté aux figures 5 et 6.

On introduit dans la bague 34 les pinces conductrices 17 et 18 qui viennent en butée contre les fonds 39 en étant calées par les languettes 40 et 41. On introduit alors les fils conducteurs gainés dans les alésages 37 et 38 et on introduit alors en force la bague 34 ainsi équipée dans l'alésage inférieur 5 de l'initiateur jusqu'à encliquetage des nervures 35 et 36 dans les gorges radiales 32 et 33. C'est pour permettre cette introduction et cet encliquetage des nervures 35 et 36 qu'il est essentiel que la bague de fermeture 34 ainsi que la couche externe de l'embase 2 présentent une certaine élasticité.

Les prises 29 des pinces conductrices 17 et 18 pénètrent dans les alésages étroits 30 et 31 et viennent au contact des électrodes 14 et 15 tandis que les pattes de ces pinces viennent en butée contre le fond de l'alésage 5 et que les fils conducteurs pénètrent dans les pinces jusqu'aux butées internes 27 et 28.

Les pinces conductrices 17 et 18 ont une longueur initiale telle que, dans ces conditions, l'introduction de la bague 34 jusqu'à son encliquetage nécessite une déformation des jonctions déformables 21 et 22 par infléchissement vers l'intérieur des pinces des attaches métalliques 23 et 24 qui viennent enserrer les fils conducteurs 6 et 7 en découpant leur gaine isolante pour venir au contact des âmes conductrices comme cela est visible à la figure 3.

A partir de ce moment là, il y a une continuité de jonction électrique entre les fils 6 et 7 et le dispositif d'initiation pyrotechnique 11.

Il faut observer qu'à partir de ce moment là ni la bague 34, ni les fils conducteurs 6 et 7 ne peuvent plus être retirés de l'initiateur 1.

Il est également possible d'introduire d'abord les pinces dans l'initiateur et ensuite la bague et les fils conducteurs.

L'invention permet ainsi la mise en oeuvre d'un procédé d'assemblage sur une chaîne continue de générateurs pyrotechniques de gaz équipés de fils conducteurs selon lequel l'initiateur, dépourvu des fils conducteurs et de la bague de fermeture, est incorporé au générateur en début de chaîne d'assemblage et selon lequel les fils conducteurs gainés supportés par la bague de fermeture éventuellement munie des pinces conductrices ne sont incorporés à l'initiateur contenu dans le générateur qu'ultérieurement, cette incorporation étant irréversible, interne à l'initiateur et donc au générateur et ne nécessitant aucune soudure.

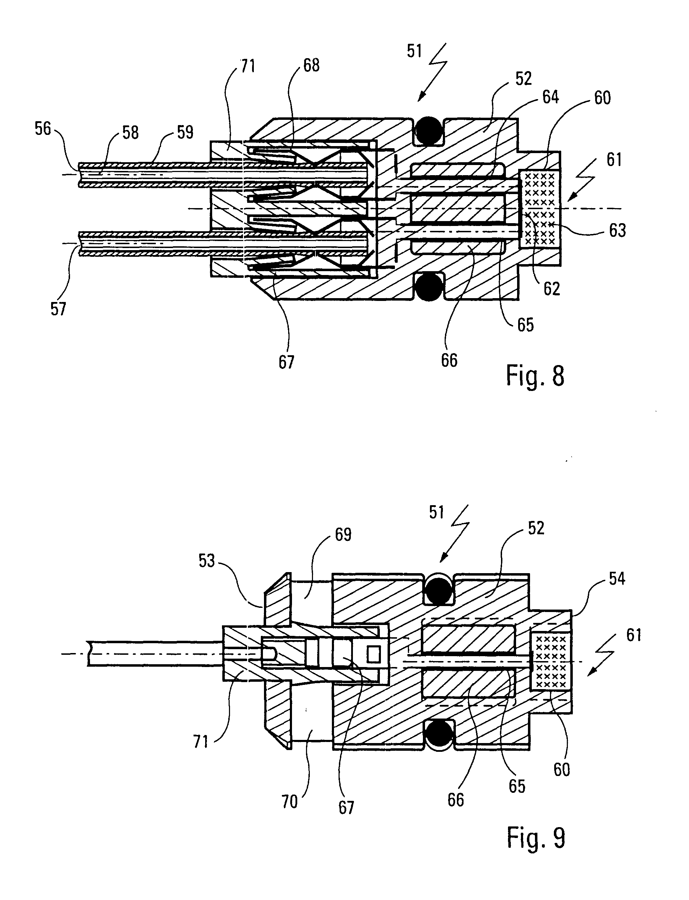

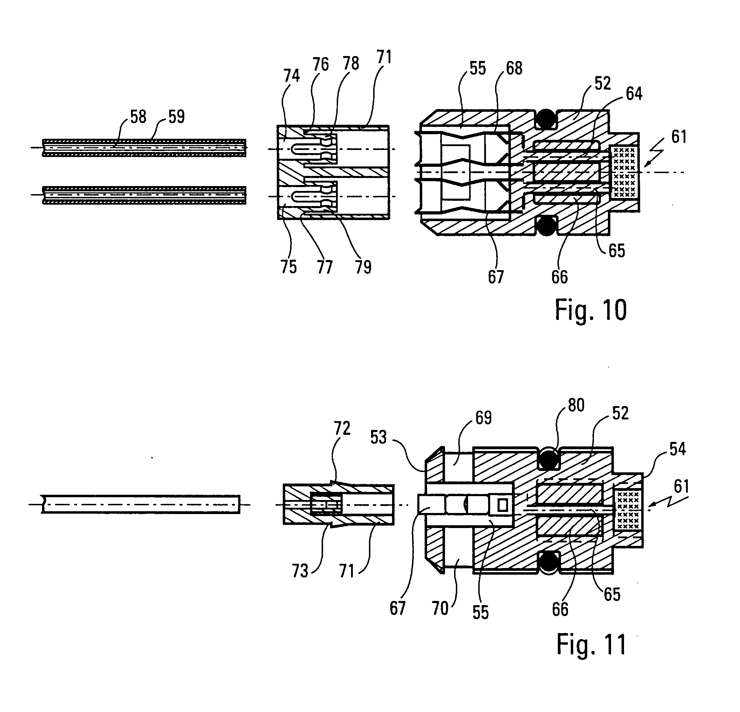

On a représenté aux figures 7 à 11, une variante de réalisation selon laquelle les électrodes et les pinces conductrices forment des pièces uniques.

On observe sur ces figures un initiateur 51 comprenant une embase 52 dont les extrémités sont constituées par deux faces planes 53 et 54. L'embase 52 comporte un alésage inférieur 55 de révolution débouchant sur la face plane inférieure 53 et dans lequel pénètrent deux fils conducteurs 56 et 57 constitués chacun par une âme conductrice 58 entourée par une gaine isolante 59.

L'embase 52 comporte également un second alésage dit supérieur 60 débouchant sur l'autre face plane 54 et contenant un dispositif d'initiation pyrotechnique 61 constitué par un fil résistant 62 et par une composition pyrotechnique 63.

L'embase 52 est moulée autour de deux électrodes 64 et 65 entourées par un noyau de ferrite 66 et incorporant dans leur partie inférieure des pinces conductrices 67 et 68 analogues à celles décrites plus haut.

La partie inférieure du premier alésage 55 présente deux gorges radiales 69 et 70.

Les extrémités des fils conducteurs 56 et 57 pénétrant dans l'alésage 55 sont supportés par une bague de fermeture 71 en matière plastique isolante présentant une certaine élasticité. La bague 71 est une pièce de révolution de section elliptique qui présente deux nervures externes 72 et 73 permettant, en coopération avec les gorges radiales 69 et 70 un encliquetage irréversible de la bague 71 dans l'embase 52.

La bague de fermeture 71 est traversée par deux alésages cylindriques 74 et 75 comportant chacun une partie inférieure dont le diamètre est sensiblement égal au diamètre extérieur des fils conducteurs gainés 56 et 57 et une partie supérieure dont le diamètre permet l'introduction de l'une des pinces conductrices 67 ou 68, la bague de fermeture présentant ainsi, dans chacun des alésages 74 et 75 un fond 76 et 77.

Par ailleurs la partie inférieure de chacun des alésages 74 et 75 est prolongée à l'intérieur de la bague 71 par une collerette échancrée, cylindrique et creuse 78 et 79 dont le diamètre intérieur est sensiblement égal au diamètre extérieur des dits fils gainés 56 et 57. Les fonds 76 et 77 ainsi que les collerettes échancrées 78 et 79 constituent les éléments de mise sous contrainte des pinces conductrices 67 et 68.

Enfin l'embase 52 porte un joint externe d'étanchéité 80 pour permettre son utilisation dans un générateur pyrotechnique de gaz.

La mise en place des fils conducteurs 56 et 57 dans l'initiateur 51 se fait par introduction de ces derniers dans la bague 71 et par entrée en force de cette dernière dans l'alésage 55. Le fonctionnement des pinces conductrices 67 et 68 est alors identique à celui exposé plus haut pour les pinces 17 et 18 de l'initiateur 1.

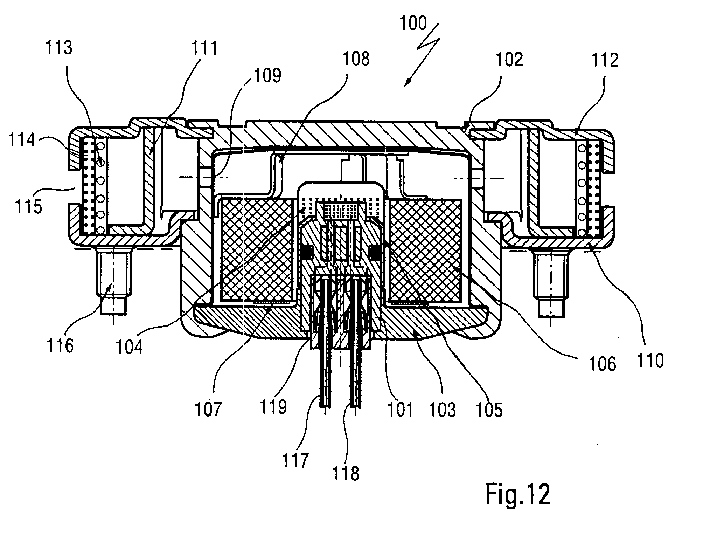

On a représenté à la figure 12 un exemple d'utilisation d'un initiateur tel que décrit et illustré aux figures 7 à 9 dans un générateur pyrotechnique de gaz 100 pour coussin gonflable.

Le générateur représenté sur cette figure est décrit en détail dans la demande de brevet français No. 2 730 965 et est plus particulièrement destiné à être logé dans le volant d'un véhicule automobile pour protéger son conducteur.

Le générateur 100 comprend un corps cylindrique 102 fermé par une bague métallique 103 sertie dans ce dernier. La bague métallique 103 comprend un orifice central dans lequel est logé l'initiateur 101 selon l'invention qui, dans cet exemple, est renforcé par une poudre vive 104 contenue dans un capuchon métallique fragmentable 105 disposé autour de l'initiateur 101. La poudre 104 est avantageusement une poudre à base de bore et de nitrate de potassium.

Un bloc cylindrique creux 106 de composition pyrotechnique génératrice de gaz est disposé autour du dispositif d'allumage ainsi constitué. La composition génératrice de gaz est avantageusement constituée par un propergol composite à liant silicone et dont la charge oxydante est à base de perchlorate d'ammonium et de nitrate de sodium. Le bloc 106 est calé par un ressort 107 et par une pièce métallique de calage 108. Des orifices 109 permettent aux gaz de combustion de quitter le corps 102 du générateur qui porte une bague annulaire externe 110 supportant un déflecteur ajouré 111 ainsi qu'un diffuseur 112. Les gaz quittant le corps du générateur par les orifices 109 sont répartis par le déflecteur ajouré 111 sur des grilles de condensation 113 et 114 avant de quitter le générateur par une ouverture circulaire périphérique 115 pour gonfler le coussin de protection. Des vis 116 portées par la bague externe 110 permettent la fixation du générateur 100 dans le volant.

Le générateur 100 peut être aisément assemblé sur une chaîne de montage continue à partir de l'initiateur 101 dépourvu de ses fils conducteurs 117 et 118 ainsi que de sa bague de fermeture 119 qui ne sont mis en place qu'en fin de chaîne de montage sur le générateur totalement assemblé ou même qui ne seront mis en place qu'ultérieurement sur le module incorporant ce générateur.

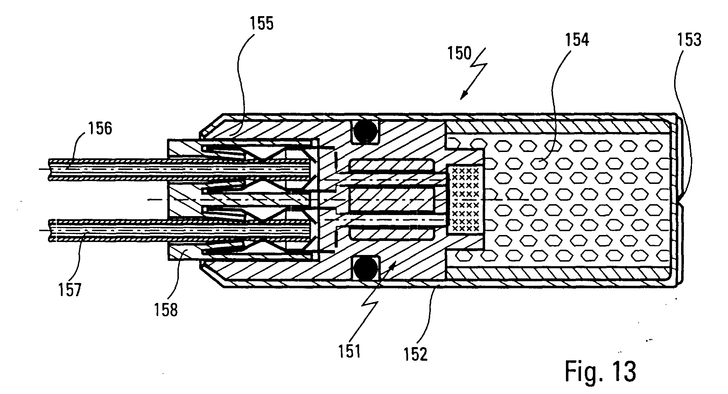

On a représenté à la figure 13 un exemple d'utilisation d'un initiateur 151 tel que décrit et illustré par les figures 7 à 9 dans un générateur pyrotechnique de gaz 150 pour rétracteur de ceinture de sécurité.

Le générateur 150 se compose d'un corps métallique cylindrique 152 comportant une coiffe fragmentable 153 sous l'effet d'une augmentation de la pression interne au générateur.

Le générateur 150 contient un initiateur 151 conforme à l'invention ainsi qu'une poudre génératrice de gaz 154. Le corps 152 du générateur est serti sur l'embase 155 de l'initiateur 151.

Le générateur 150 peut, lui aussi, être facilement assemblé sur une chaîne de montage continue à partir de l'initiateur 151 dépourvu de ses fils conducteurs 156 et 157 ainsi que de sa bague de fermeture 158 qui sont mis en place sur le générateur totalement assemblé soit en fin de chaîne de montage, soit ultérieurement, dans les modules "rétracteur de ceinture de sécurité" déjà assemblés et incorporant le générateur 150.

## Revendications

1. Initiateur pyrotechnique bifilaire (1) constitué principalement par :
**i)** une embase (2) dont les extrémités sont constituées par deux faces planes (3,4), la dite embase comportant un premier alésage (5) central dit "inférieur" débouchant sur l'une des dites faces et dans lequel pénètrent deux fils (6,7) conducteurs de l'électricité constitués chacun par une âme conductrice (8) entourée par une gaine isolante (9), ainsi qu'un second alésage (10) central dit "supérieur" qui est séparé du premier alésage et qui débouche sur l'autre face plane (4) et qui contient un dispositif d'initiation pyrotechnique (11),
**ii)** deux électrodes (14,15) fixées à l'intérieur de la dite embase et dont les extrémités sont situées dans chacun des deux alésages (5,10), les extrémités inférieures de chaque électrode étant reliées à l'un des dits fils conducteurs, tandis que les extrémités supérieures des dites électrodes sont connectées au dispositif d'initiation pyrotechnique (11),
et **caractérisé en ce que** :
**iii)** chacune des dites électrodes (14,15) est terminée dans sa partie inférieure par une pince conductrice (17,18) susceptible, sous la contrainte d'une poussée exercée dans le prolongement des dites électrodes, de serrer l'un des dits fils conducteurs (6,7) en découpant sa gaine isolante (9),
**iv)** la partie inférieure du dit premier alésage central (5) présente au moins un évidement,
**v)** les extrémités des dits fils conducteurs (6,7) pénétrant dans le premier alésage central (5) de l'embase (2) sont supportées par une bague de fermeture (34) dont la paroi latérale présente au moins une nervure externe (35,36) permettant, en coopération avec le dit évidement (32,33), un encliquetage irréversible de la bague (34) dans l'embase (2), la dite bague comportant par ailleurs des éléments de mise sous contrainte des dites pinces conductrices (17,18).

2. Initiateur pyrotechnique selon la revendication 1 **caractérisé en ce que** le dit premier alésage central (5) présente deux gorges (32,33).

3. Initiateur pyrotechnique selon la revendication 2 **caractérisé en ce que** la dite embase (2) est une embase de révolution dont les extrémités sont constituées par deux faces planes (3,4) et **en ce que** le dit premier alésage (5) et le dit second alésage (10) sont des alésages de révolution.

4. Initiateur pyrotechnique selon la revendication 3 **caractérisé en ce que** chaque pince conductrice (17) est essentiellement constituées par deux pattes (25,26) métalliques planes disposées en regard l'une de l'autre, chaque patte comportant une zone déformable (21,22) constituée par deux attaches métalliques (23,24) en forme de secteurs circulaires.

5. Initiateur pyrotechnique selon la revendication 4 **caractérisé en ce que** ladite bague de fermeture (71) est traversée par deux alésages cylindriques (74,75) dans lesquels pénètrent chacun des fils conducteurs gainés.

6. Initiateur pyrotechnique selon la revendication 5 **caractérisé en ce que** la bague de fermeture (71) comprend deux alésages cylindriques (74,75) comportant une partie inférieure dont le diamètre est sensiblement égal au diamètre extérieur des fils conducteurs gainés et une partie supérieure dont le diamètre permet l'introduction de l'une des pinces conductrices (67,68); la bague de fermeture présentant ainsi, dans chacun des alésages (74,75), un fond (76,77).

7. Initiateur pyrotechnique selon la revendication 6 **caractérisé en ce que** la partie inférieure de chaque alésage est prolongée à l'intérieur de la bague (71) par une collerette (78,79) cylindrique creuse dont le diamètre intérieur est sensiblement égal au diamètre extérieur des dits fils gainés, les fonds (76,77) et les dites collerettes (78,79) constituant les éléments de mise sous contrainte des dites pinces conductrices.

8. Initiateur pyrotechnique selon la revendication 7, **caractérisé en ce que** la dite embase (2) est moulée sur les dites électrodes (14,15).

9. Initiateur pyrotechnique selon la revendication 8 **caractérisé en ce que** le dit dispositif d'initiation est constitué par une résistance (12) fixée aux dites électrodes et par une composition pyrotechnique d'initiation (13).

10. Initiateur pyrotechnique selon la revendication 9 **caractérisé en ce que** la dite composition pyrotechnique d'initiation est constituée par une poudre d'allumage mélangée à une laque à base de nitrocellulose.

11. Initiateur pyrotechnique selon l'une quelconque des revendications 1 à 10 **caractérisé en ce que** les dites électrodes (14,15) sont entourées par au moins un noyau de ferrite (16).

12. Utilisation d'un initiateur pyrotechnique selon l'une quelconque des revendications 1 à 11 dans un générateur pyrotechnique de gaz destiné à la sécurité automobile.

13. Utilisation selon la revendication 12 **caractérisée en ce que** le dit générateur pyrotechnique de gaz est destiné à gonfler un coussin de protection pour occupant de véhicule automobile.

14. Utilisation selon la revendication 12 **caractérisée en ce que** le dit générateur pyrotechnique de gaz est destiné à actionner un rétracteur de ceinture de sécurité pour occupant d'un véhicule automobile.

15. Procédé d'assemblage sur une chaîne continue d'un générateur pyrotechnique de gaz utilisant un initiateur pyrotechnique selon l'une quelconque des revendications 1 à 11 **caractérisé en ce que** l'initiateur, dépourvu des fils conducteurs et de la bague de fermeture, est incorporé au générateur en début de chaîne d'assemblage et **en ce que** les dits fils conducteurs gainés supportés par la bague de fermeture ne sont incorporés à l'initiateur qu'ultérieurement.

## Patentansprüche

1. Pyrotechnischer Zweileiter-Zünder (1), der insbesondere aufweist:
i) eine Basis (2), deren Enden zwei ebene Flächen (3, 4) bilden, wobei die Basis eine erste, "untere" genannte zentrale Bohrung (5) aufweist, die in der einen der Flächen endet und durch welche zwei elektrisch leitfähige Leiter (6, 7) verlaufen, die jeweils aus einer leitfähigen Seele (8) bestehen, die von einer isolierenden Hülle (9) umgeben ist, sowie eine zweite, "obere" genannte zentrale Bohrung (10), die von der ersten Bohrung beabstandet ist und die in der anderen ebenen Fläche (4) mündet und die eine pyrotechnische Zündervorrichtung (11) umfasst,
ii) zwei Elektroden (14, 15), die innen an der Basis fixiert sind und deren Enden sich jeweils in den zwei Bohrungen (5, 10) befinden, wobei die unteren Enden jeder Elektrode mit dem einen der leitfähigen Leiter verbunden sind, während die oberen Enden der Elektroden mit der pyrotechnischen Zündvorrichtung (11) verbunden sind,
**dadurch gekennzeichnet, dass**:
iii) jede der Elektroden (14, 15) an ihrem unteren Teil in einer leitfähigen Klemme (17, 18) endet, die durch Einwirken eines Schubs, der in der Verlängerung der Elektroden wirkt, einen der leitfähigen Leiter (6, 7) greift, indem in seine isolierende Hülle (9) geschnitten wird,
IV) der untere Teil der ersten zentralen Bohrung (5) wenigstens eine Aussparung aufweist,
V) die Enden der leitfähigen Leiter (6, 7), die durch die erste zentrale Bohrung (5) der Basis (2) verlaufen, durch einen Verschlussring (34) getragen werden, dessen Seitenband wenigstens eine externe Rippe (35, 36) aufweist, die in Zusammenwirkung mit der Aussparung (32, 33) ein irreversibles Einklinken des Rings (34) in die Basis (2) ermöglicht, wobei der Ring im übrigen Elemente umfasst, um auf die leitfähigen Klemmen (17, 18) einzuwirken.

2. Pyrotechnischer Zünder nach Anspruch 1, **dadurch gekennzeichnet, dass** die erste zentrale Bohrung (5) zwei Auskehlungen (32, 33) aufweist.

3. Pyrotechnischer Zünder nach Anspruch 2, **dadurch gekennzeichnet, dass** die Basis (2) eine rotationsförmige Basis ist, deren Enden aus zwei ebenen Flächen (3, 4) bestehen, und dass die erste Bohrung (5) und die zweite Bohrung (10) rotationsförmige Bohrungen sind.

4. Pyrotechnischer Zünder nach Anspruch 3, **dadurch gekennzeichnet, dass** jede leitfähige Klemme (17) im wesentlichen aus zwei ebenen metallischen Klammern (25, 26) besteht, die einander gegenüber angeordnet sind, wobei jede Klammer einen deformierbaren Bereich (21, 22) aufweist, der aus zwei Metalllaschen (23, 24) in Form von Kreissegmenten besteht.

5. Pyrotechnischer Zünder nach Anspruch 4, **dadurch gekennzeichnet, dass** der Verschlussring (71) durchbrochen wird durch zwei zylindrische Bohrungen (74, 75), durch welche jeweils die umhüllten leitfähigen Leiter verlaufen.

6. Pyrotechnischer Zünder nach Anspruch 5, **dadurch gekennzeichnet, dass** der Verschlussring (71) zwei zylindrische Bohrungen (74, 75) aufweist, die einen unteren Abschnitt aufweisen, dessen Durchmesser im wesentlichen gleich dem äusseren Durchmesser der umhüllten leitfähigen Leiter ist, und einen oberen Abschnitt, dessen Durchmesser die Einführung der einen der leitfähigen Klammern (67, 68) ermöglicht, wobei der Verschlussring ausserdem bei jeder der Bohrungen (74, 75) einen Boden (76, 77) aufweist.

7. Pyrotechnischer Zünder nach Anspruch 6, dadurch genkennzeichnet, dass der untere Abschnitt jeder Bohrung in den Ring (71) durch einen zylindrischen Hohlkragen (78, 79) verlängert wird, dessen Innendurchmesser im wesentlichen gleich dem Aussendurchmesser der umhüllten Leiter ist, wobei die Böden (76, 77) und die Krägen (78, 79) die Elemente darstellen, die auf die leitfähigen Klammern einwirken.

8. Pyrotechnischer Zünder nach Anspruch 7, **dadurch gekennzeichnet, dass** die Basis (2) mit den Elektroden (14, 15) vergossen wird.

9. Pyrotechnischer Zünder nach Anspruch 8, **dadurch gekennzeichnet, dass** die Zündvorrichtung aus einem Widerstand (12), der an den Elektroden befestigt ist, und einer pyrotechnischen Zündmischung (13) gebildet wird.

10. Pyrotechnischer Zünder nach Anspruch 9, **dadurch gekennzeichnet, dass** die pyrotechnische Zündmischung aus einem mit einem Lack auf Basis von Nitrocellulose vermischten Zündpulver besteht.

11. Pyrotechnischer Zünder nach einem der Ansprüche 1 bis 10, **dadurch gekennzeichnet, dass** die Elektroden (14, 15) wenigstens von einem Ferritkern (16) umgeben sind.

12. Verwendung eines pyrotechnischen Zünders nach einem der Ansprüche 1 bis 11 in einem pyrotechnischen Gasgenerator für Fahrzeugsicherheitseinrichtungen.

13. Verwendung nach Anspruch 12, **dadurch gekennzeichnet, dass** der pyrotechnische Gasgenerator zum Aufblasen eines Schutzkissens für Insassen eines Fahrzeugs dient.

14. Verwendung nach Anspruch 12, **dadurch gekennzeichnet, dass** der pyrotechnische Gasgenerator zum Treiben eines Gurtstraffers von Fahrzeuginsassen dient.

15. Verfahren zum Zusammenbauen eines pyrotechnischen Gasgenerators mit einem pyrotechnischen Zünder nach einem der Ansprüche 1 bis 11 in der Fertigung, **dadurch gekennzeichnet, dass** der Zünder ohne leitfähige Leiter und Verschlussring in den Generator am Anfang der Fertigung für das Zusammenbauen eingesetzt wird und dass die leitfähigen, umhüllten und durch den Verschlussring getragenen Leiter erst am Schluss eingesetzt werden.

## Claims

1. Two-wire pyrotechnic initiator (1), consisting principally of:
i) a base (2) whose ends consist of two plane faces (3, 4), the said base having a first "lower" central bore (5) which opens onto one of the said faces and into which two electrically conducting wires (6, 7) penetrate, these wires each consisting of a conductive core (8) enclosed by an insulating sheath (9), as well as a second "upper" central bore (10) which is separated from the first bore, opens onto the other plane face (4) and contains a pyrotechnic initiation device (11),
ii) two electrodes (14, 15) which are fixed to the inside of the said base and whose ends are located in each of the two bores (5, 10), the lower ends of each electrode being connected to one of the said conducting wires, whereas the upper ends of the said electrodes are connected to the pyrotechnic initiation device (11),
and **characterised in that**
iii) each of the said electrodes (14, 15) ends at its lower part in a conductive terminal (17, 18) which, under the effect of a thrust exerted in continuation of the said electrodes, is capable of clamping one of the said conducting wires (6, 7) while cutting its insulating sheath (9),
iv) the lower part of the said first central bore (5) has at least one recess,
v) the ends of the said conducting wires (6, 7) penetrating into the first central bore (5) of the base (2) are supported by a closing ring (34) whose side wall has at least one external rib (35, 36) which, in cooperation with the said recess (32, 33), permits irreversible snap-fastening of the ring (34) in the base (2), the said ring furthermore having elements for pressing the said conductive terminals (17, 18).

2. Pyrotechnic initiator according to Claim 1,
**characterised in that** the said first central bore (5) has two grooves (32, 33).

3. Pyrotechnic initiator according to Claim 2,
**characterised in that** the said base (2) is an axisymmetric base whose ends consist of two plane faces (3, 4), and **in that** the said first bore (5) and the said second bore (10) are axisymmetric bores.

4. Pyrotechnic initiator according to Claim 3,
**characterised in that** each conductive terminal (17) essentially consists of two plane metal lugs (25, 26) arranged facing one another, each lug having a deformable region (21, 22) consisting of two metal clips (23, 24) in the form of circular sectors.

5. Pyrotechnic initiator according to Claim 4,
**characterised in that** two cylindrical bores (74, 75), into which each of the sheathed conducting wires penetrate, pass through the said closing ring (71).

6. Pyrotechnic initiator according to Claim 5,
**characterised in that** the closing ring (71) comprises two cylindrical bores (74, 75), which have a lower part whose diameter is substantially equal to the outer diameter of the sheathed conducting wires and an upper part whose diameter makes it possible to insert one of the conductive terminals (67, 68); the closing ring also has a back wall (76, 77) in each of the bores (74, 75).

7. Pyrotechnic initiator according to Claim 6,
**characterised in that** the lower part of each bore is continued inside the ring (71) by a hollow cylindrical collar (78, 79) whose inner diameter is substantially equal to the outer diameter of the said sheathed wires, the back walls (76, 77) and the said collars (78, 79) constituting the elements for pressing the said conductive terminals.

8. Pyrotechnic initiator according to Claim 7,
**characterised in that** the said base (2) is moulded over the said electrodes (14, 15).

9. Pyrotechnic initiator according to Claim 8,
**characterised in that** the said initiation device consists of a resistor (12) fixed to the said electrodes and of a pyrotechnic initiating composition (13).

10. Pyrotechnic initiator according to Claim 9,
**characterised in that** the said pyrotechnic initiating composition consists of an igniting powder mixed with a nitrocellulose-based lacquer.

11. Pyrotechnic initiator according to any one of Claims 1 to 10, **characterised in that** the said electrodes (14, 15) are enclosed by at least one ferrite core (16).

12. Use of a pyrotechnic initiator according to any one of Claims 1 to 11 in a pyrotechnic gas generator intended for car safety.

13. Use according to Claim 12, **characterised in that** the said pyrotechnic gas generator is intended to inflate an airbag for an occupant of a motor vehicle.

14. Use according to Claim 12, **characterised in that** the said pyrotechnic gas generator is intended to actuate a seat-belt retractor for an occupant of a motor vehicle.

15. Method for assembly, on a continuous line, of a pyrotechnic gas generator using a pyrotechnic initiator according to any one of Claims 1 to 11, **characterised in that** the initiator, without the conducting wires and the closing ring, is incorporated into the generator at the start of the assembly line, and **in that** the said sheathed conducting wires supported by the closing ring are not incorporated into the initiator until later.
